# EUROPÄISCHE PATENTANMELDUNG

(11) **EP 2 650 725 A2**
(43) Veröffentlichungstag der Anmeldung: **16.10.2013**
(21) Anmeldenummer: 13162178.1
(22) Anmeldetag: 03.04.2013
(51) Int. Cl.: G03B 17/56, F16B 2/02

(54) **Haltevorrichtung zum Befestigen von Kamerazubehörteilen**

(30) Priorität: 13.04.2012 DE 102012007474
(71) Anmelder: Arnold & Richter Cine Technik GmbH & Co. Betriebs KG, 80799 München (DE)
(72) Erfinder: Schatzl, Gerhard, 3100 St. Pölten (AT)
(74) Vertreter: Manitz, Finsterwald & Partner GbR

(57) **Zusammenfassung**

Eine Haltevorrichtung zum Befestigen von Kamerazubehörteilen an einem Kamerasystem ist an Stützrohren des Kamerasystems befestigbar. Die Haltevorrichtung umfasst ein Brückenteil, das zwei Paare von Öffnungen zum Aufnehmen von Stützrohren aufweist, wobei sich die Öffnungen des einen Paares zumindest bezüglich ihres Abstandes von den Öffnungen des anderen Paares unterscheiden; wenigstens ein Paar von Klemmelementen, die an dem Brückenteil vorgesehen und zumindest zwischen einer Klemmstellung und einer Freigabestellung verstellbar sind, wobei die Klemmelemente in ihrer Klemmstellung in den Öffnungen aufgenommene Stützrohre an dem Brückenteil arretieren; und eine Betätigungseinrichtung, welche dazu ausgelegt ist, die Klemmelemente gemeinsam zu verstellen. Die Klemmelemente weisen verschiedene Klemmabschnitte auf, die dazu angepasst sind, Stützrohre unterschiedlichen Durchmessers und/oder unterschiedlichen Abstands an dem Brückenteil zu arretieren.

## Beschreibung

Die vorliegende Erfindung betrifft eine Haltevorrichtung zum Befestigen von Kamerazubehörteilen an einem Kamerasystem, wobei die Haltevorrichtung an Stützrohren des Kamerasystems befestigbar ist, mit einem Brückenteil, das Öffnungen zum Aufnehmen von Stützrohren aufweist, wenigstens einem Paar von Klemmelementen, die an dem Brückenteil vorgesehen und zumindest zwischen einer Klemmstellung und einer Freigabestellung verstellbar sind, wobei die Klemmelemente in ihrer Klemmstellung in den Öffnungen aufgenommene Stützrohre an dem Brückenteil arretieren, und mit einer Betätigungseinrichtung, welche dazu ausgelegt ist, die Klemmelemente zu verstellen.

Zur Befestigung von Kamerazubehörteilen, beispielsweise Vorsatzgeräten, Filtern, Schärfenzieheinrichtungen, Handgriffen oder dergleichen, an einem Kamerasystem können an der Kamera zwei voneinander beabstandete Stützrohre befestigt werden, welche sich parallel zur Achse des Kameraobjektivs erstrecken. Die Befestigung der Kamerazubehörteile an den Stützrohren erfolgt mit Hilfe der genannten Haltevorrichtung. Zum Befestigen der Zubehörteile kann das Brückenteil eine oder mehrere Befestigungseinrichtungen aufweisen, die beispielsweise in Gewindebohrungen des Brückenteils eingeschraubt werden können.

Die Arretierung der Haltevorrichtung erfolgt nach der Einstellung des gewünschten Abstandes zur Kamera mit Hilfe der Betätigungseinrichtung. Da für die Befestigung von Kamerazubehörteilen Stützrohrsysteme mit unterschiedlichen Stützrohrdurchmessern und/oder unterschiedlichen Stützrohrabständen gebräuchlich sind, ist es notwendig, jeweils angepasste Haltevorrichtungen bereitzuhalten.

Es ist eine Aufgabe der vorliegenden Erfindung, eine Haltevorrichtung zum Befestigen von Kamerazubehörteilen an einem Kamerasystem anzugeben, die universell verwendbar und einfach zu bedienen ist.

Die Lösung der Aufgabe erfolgt durch eine Haltevorrichtung mit den Merkmalen des Anspruchs 1 und insbesondere durch eine Haltevorrichtung mit einem Brückenteil, das zwei Paare von Öffnungen zum Aufnehmen von Stützrohren aufweist, wobei sich die Öffnungen des einen Paares zumindest bezüglich ihres Abstandes von den Öffnungen des anderen Paares unterscheiden; wenigstens einem Paar von Klemmelementen, die an dem Brückenteil vorgesehen und zumindest zwischen einer Klemmstellung und einer Freigabestellung verstellbar sind, wobei die Klemmelemente in ihrer Klemmstellung in den Öffnungen aufgenommene Stützrohre an dem Brückenteil arretieren; und einer Betätigungseinrichtung, welche dazu ausgelegt ist, die Klemmelemente gemeinsam zu verstellen, wobei die Klemmelemente verschiedene Klemmabschnitte aufweisen, die dazu angepasst sind, Stützrohre unterschiedlichen Durchmessers und/oder unterschiedlichen Abstands an dem Brückenteil zu arretieren.

Dadurch ist es möglich, die Haltevorrichtung für verschiedene Stützrohrsysteme zu verwenden, ohne dass etwa verschiedene, an die jeweiligen Dimensionen angepasste Klemmelemente mit jeweils zugeordneten Betätigungseinrichtungen verwendet werden müssen. Vielmehr kann nur eine einzige Betätigungseinrichtung vorgesehen sein, welche vorzugsweise die Klemmelemente in kraftschlüssiger Weise verbindet, um über die Betätigungseinrichtung ein Verspannen der Klemmelemente an den Stützrohren zu ermöglichen. Die Arretierung kann kraftschlüssig und/oder formschlüssig erfolgen. Die Öffnungen des Brückenteils können umfänglich offen oder geschlossen sein. Der Vollständigkeit halber sei angemerkt, dass jeweils nur ein Paar von Stützrohren an dem Brückenteil arretiert wird.

Gemäß einer vorteilhaften Ausführungsform umfasst jedes Paar von Öffnungen eine erste Öffnung und eine zweite Öffnung, wobei das Paar von Klemmelementen ein erstes Klemmelement mit mehreren Klemmabschnitten und ein zweites Klemmelement mit mehreren Klemmabschnitten aufweist, und wobei die mehreren Klemmabschnitte des ersten Klemmelements den ersten Öffnungen der beiden Paare zugeordnet und die mehreren Klemmabschnitte des zweiten Klemmelements den zweiten Öffnungen der beiden Paare zugeordnet sind. Dadurch vereinfacht sich der konstruktive Aufwand, da für zwei vorzugsweise benachbarte Öffnungen nur ein einziges Klemmelement vorgesehen werden muss. Bei dieser Ausführungsform kann jedes Klemmelement zumindest zwischen einer ersten und einer zweiten Klemmstellung verstellbar sein, wobei die jeweiligen Klemmstellungen derart aufeinander abgestimmt sein können, dass in einer jeweiligen Klemmstellung jeweils ein bestimmtes Paar von Klemmabschnitten mit einem bestimmten Paar von Öffnungen zusammenwirkt.

Alternativ oder zusätzlich kann jedes Klemmelement wenigstens zwei Klemmabschnitte aufweisen, die dazu angepasst sind, Stützrohre unterschiedlichen Durchmessers an dem Brückenteil zu arretieren, wobei die wenigstens zwei Klemmabschnitte des jeweiligen Klemmelements derselben Öffnung des Brückenteils zugeordnet sind. Hierdurch wird erreicht, dass Stützrohre unterschiedlichen Durchmessers zuverlässig an dem Brückenteil arretiert werden können, ohne dass die Gefahr besteht, dass sich die Arretierung unbeabsichtigt löst. Die wenigstens zwei Klemmabschnitte können sich hierfür beispielsweise hinsichtlich ihrer Krümmung, ihrer Ausrichtung und/oder ihrer Relativposition in Bezug auf die jeweiligen Öffnungen unterscheiden. Bei dieser Ausführungsform können die wenigstens zwei Klemmabschnitte des jeweiligen Klemmelements dazu angepasst sein, in unterschiedlichen Klemmrichtungen zu wirken. Dies kann beispielsweise dadurch erreicht werden, dass jedes Klemmelement zwischen einer ersten und einer zweiten Klemmstellung verstellbar ist.

Grundsätzlich können jedoch auch mehrere Paare von Klemmelementen vorgesehen sein, wobei jeder Klemmabschnitt an einem separaten Klemmelement vorgesehen sein kann.

Gemäß einer weiteren vorteilhaften Ausführungsform der Erfindung sind die Klemmelemente senkrecht zu der Achse der Stützrohre versetzbar. Das Versetzen kann insbesondere in linearer Richtung erfolgen.

Die Klemmelemente können parallel zu einer durch die Stützrohre definierten Ebene versetzbar sein. Da in der Regel auch die Öffnungen entlang dieser Ebene verteilt sind, ist es auf einfache Weise möglich, mit demselben Klemmelement wahlweise in dem einen oder dem anderen Paar von Öffnungen jeweils eingeführte Stützrohre zu arretieren.

Die Klemmelemente sind vorzugsweise gegenläufig zueinander versetzbar. Gegenläufig zueinander versetzbare Klemmelemente lassen sich aufgrund des umgreifenden Kraftflusses besonders wirksam und zuverlässig verspannen. Alternativ hierzu können jedoch auch gleichläufig versetzbare Klemmelemente verwendet werden.

Grundsätzlich können die Klemmelemente auch schwenkbar ausgestaltet sein, wobei unter Ausnutzung von Hebelkräften eine besonders zuverlässige Verklemmung der Stützrohre erreicht werden kann.

Gemäß einer weiteren vorteilhaften Ausführungsform umfasst die Betätigungseinrichtung einen Gewindetrieb zum Verstellen der Klemmelemente, wobei der Gewindetrieb eine Spindel aufweist, welche an einem Ende mit einer Handhabe drehfest gekoppelt ist. Ein derartiger Gewindetrieb lässt sich auf einfache Weise betätigen und weist neben einer hohen Klemmkraft eine ausreichende Selbsthemmung auf, so dass ein unbeabsichtigtes Verstellen der Klemmelemente zuverlässig verhindert wird.

Die Spindel kann einen Gewindeabschnitt und einen Anschlagabschnitt aufweisen, wobei der Gewindeabschnitt mit einem der Klemmelemente zusammenwirkt und der Anschlagabschnitt mit einem anderen der Klemmelemente zusammenwirkt, um die genannten Klemmelemente über die Gewindestange an den Stützrohren verspannen zu können. Das Verspannen erfolgt insbesondere auf Zug, d.h. durch eine Verringerung des Abstands der Klemmelemente, und/oder auf Druck, d.h. durch eine Vergrößerung des Abstands der Klemmelemente. Beispielsweise kann damit das eingangs erwähnte Wirken der Klemmelemente in unterschiedlichen Klemmrichtungen erreicht werden, wobei beispielsweise die in diesem Zusammenhang erwähnte erste Klemmstellung einem Verspannen auf Zug und die zweite Klemmstellung einem Verspannen auf Druck entspricht.

Alternativ kann die Betätigungseinrichtung eine Kniehebelanordnung zum Verstellen der Klemmelemente umfassen.

Weitere vorteilhafte Ausführungsformen sind in den Unteransprüchen, der Beschreibung und den Zeichnungen angegeben.

Die Erfindung wird nachfolgend anhand eines Ausführungsbeispiels mit Bezug auf die Zeichnungen erläutert:
- Fig. 1: eine Explosionsdarstellung einer erfindungsgemäßen Haltevorrichtung; und
- Fig. 2: einen Längsschnitt durch die Haltevorrichtung.

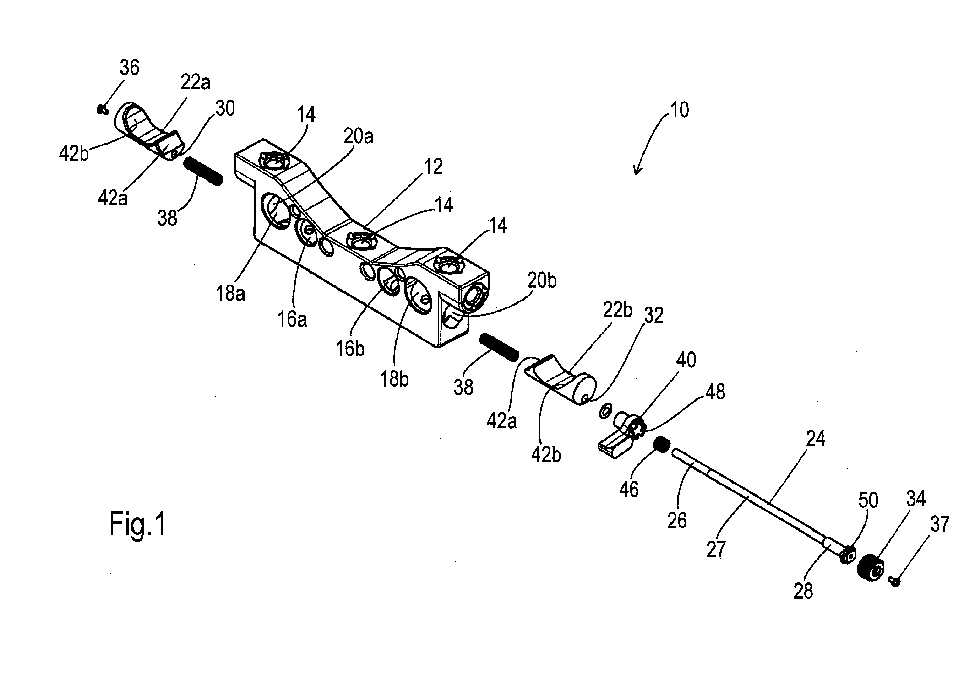

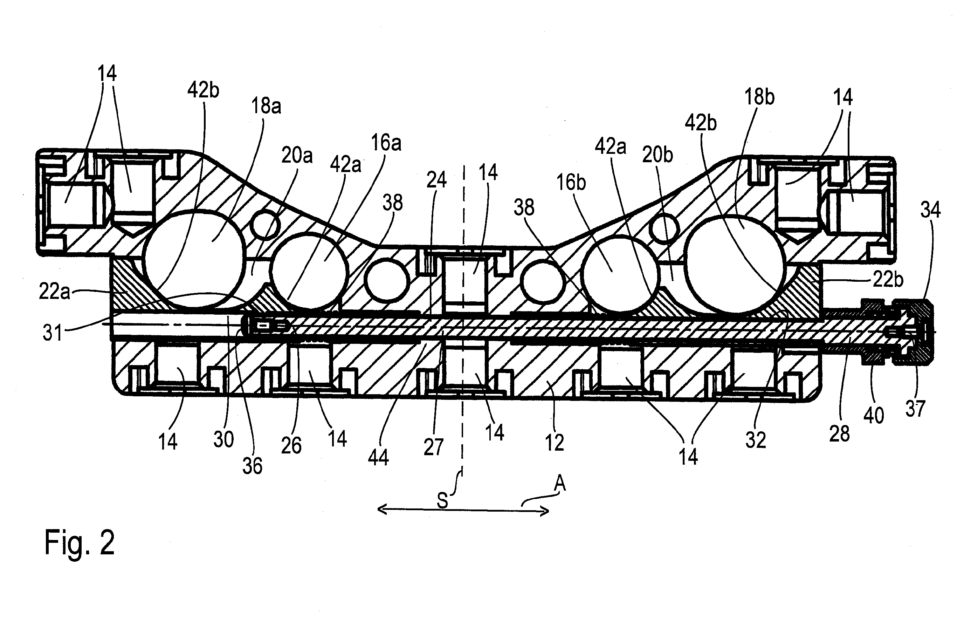

Fig. 1 und 2 zeigen eine beispielhafte Haltevorrichtung 10 zum Befestigen von Kamerazubehörteilen an einem Kamerasystem (nicht gezeigt) gemäß der vorliegenden Erfindung. Die Haltevorrichtung 10 umfasst ein Brückenteil 12, das sich entlang einer Längsachse A (Fig. 2) erstreckt und das in Bezug auf eine senkrecht zur Längsachse A verlaufenden Symmetrieachse S im Wesentlichen spiegelbildlich ausgestaltet ist.

Das Brückenteil 12 ist mit einer Vielzahl von Bohrungen 14 versehen, welche ein Innengewinde besitzen können, so dass mit Hilfe von geeigneten Befestigungseinrichtungen (nicht dargestellt) Kamerazubehörteile (nicht dargestellt) mit der Haltevorrichtung 10 verbunden werden können. Die Bohrungen 14 können als Sackbohrungen oder durchgehende Bohrungen bzw. Öffnungen ausgebildet sein.

Zum Aufnehmen von Stützrohren (nicht dargestellt) weist das Brückenteil 12 ein inneres Paar von Öffnungen 16a, 16b und ein äußeres Paar von Öffnungen 18a, 18b mit einem annähernd zylindrischen Querschnitt auf, welche entlang der Längsachse A verteilt sind und sich senkrecht zur Längsachse A und zur Symmetrieachse S durch das Brückenteil 12 hindurch erstrecken. Die innen liegenden Öffnungen 16a, 16b weisen einen kleineren Durchmesser auf als die außen liegenden Öffnungen 18a, 18b.

In den Öffnungen 16a, 16b, 18a, 18b können Stützrohre paarweise mit verschiedenen Rohrdurchmessern und verschiedenem gegenseitigen Abstand aufgenommen werden.

Die beispielhafte Haltevorrichtung 10 kann in der vorliegenden Konfiguration wahlweise für eines von drei verschiedenen Stützrohrsystemen verwendet werden, nämlich für ein erstes Stützrohrsystem mit einem Stützrohrdurchmesser von 15 mm und einem Stützrohrabstand vom 60 mm, für ein zweites Stützrohrsystem mit einem Stützrohrdurchmesser von 15 mm und einem Stützrohrabstand von 100 mm, oder für ein drittes Stützrohrsystem mit einem Stützrohrdurchmesser von 19 mm und einem Stützrohrabstand von 104 mm.

Zur Aufnahme von Stützrohren des ersten Stützrohrsystems sind die Öffnungen 16a, 16b vorgesehen, wobei deren Innendurchmesser zweckmäßigerweise etwas mehr als 15 mm beträgt, während Stützrohre des zweiten und des dritten Stützrohrsystems in den Öffnungen 18a, 18b aufgenommen werden können, deren Innendurchmesser zweckmäßigerweise etwas mehr als 19 mm beträgt.

Das Brückenteil 12 weist ferner zylindrische Führungen 20a, 20b mit einem im Grundsatz zylindrischen Querschnitt auf, welche in Richtung der Längsachse A verlaufen und die Öffnungen 16a, 18a bzw. die Öffnungen 16b, 18b schneiden.

In den Führungen 20a, 20b ist ein jeweiliges Klemmelement 22a bzw. 22b in Richtung der Längsachse A versetzbar aufgenommen, wobei der Querschnitt der Klemmelemente 22a, 22b im Grundsatz ebenfalls zylindrisch ist. Teilbereiche der Klemmelemente 22a, 22b sind jedoch mit Aussparungen versehen, so dass in Abhängigkeit von der Verstellposition der Klemmelemente 22a, 22b ein freier Durchtritt der Stützrohre durch die Öffnungen 16a, 16b, 18a, 18b gegeben ist. Das Zusammenwirken der Klemmelemente 22a, 22b mit den Stützrohren wird nachfolgend noch näher erläutert.

Die Klemmelemente 22a, 22b sind mit Hilfe einer Betätigungseinrichtung versetzbar, welche einen Gewindetrieb umfasst. Der Gewindetrieb weist eine Spindel 24 auf, welche an ihrem einen Ende einen mit einem Außengewinde versehenen Gewindeabschnitt 26 und an ihrem anderen Ende einen Anschlagabschnitt 28 aufweist. Zwischen dem Gewindeabschnitt 26 und dem Anschlagabschnitt 28 erstreckt sich ein gewindefreier Mittelabschnitt 27. Der Durchmesser des Anschlagabschnitts 28 ist gegenüber dem Durchmesser des Mittelabschnitts 27 vergrößert.

Das Klemmelement 22a weist eine Gewindeöffnung 30 mit einem Innengewindeabschnitt 31 auf, in welchen der Gewindeabschnitt 26 der Spindel 24 eingeschraubt ist. Eine stirnseitig am Gewindeabschnitt 26 vorgesehene Schraube 36 dient als Überdrehsicherung für die Spindel 24. Der Mittelabschnitt 27 der Spindel 24 erstreckt sich durch einen im Brückenteil 12 vorgesehenen Durchgang 44 und durch eine im Klemmelement 22b vorgesehene Durchführung 32 hindurch. Der Durchmesser der Durchführung 32 ist nur geringfügig größer als der Durchmesser des Mittelabschnitts 27, jedoch kleiner als der Durchmesser des Anschlagabschnitts 28, so dass die Spindel 24 mit ihrem Anschlagabschnitt 28 an die Außenseite des Klemmelements 22b anstößt. Die Gewindeöffnung 30 des Klemmelements 22a und die Durchführung 32 des Klemmelements 22b sind bezüglich der Achse der Führungen 20a, 20b exzentrisch angeordnet, so dass die Klemmelemente 22a, 22b in den Führungen 20a, 20b zwar axial versetzbar, jedoch drehfest gelagert sind.

Die Spindel 24 ist mittels einer zylindrischen Handhabe 34, beispielsweise einem Rändelkopf, verstellbar. Die Handhabe 34 ist drehfest mit dem Anschlagabschnitt 28 der Spindel 24 verbunden und mittels einer Schraube 37 gesichert.

Durch ein Betätigen der Handhabe 34 kann die Spindel 24 relativ zu der Gewindeöffnung 30 des Klemmelements 22a verdreht werden, wodurch der Innengewindeabschnitt 31 des Klemmelements 22a entlang der Spindel 24 wandert. Hierdurch verringert sich der Abstand zwischen dem als Spindelmutter dienenden Klemmelement 22a und dem Klemmelement 22b, welches an dem Anschlagabschnitt 28 der Spindel 24 anliegt. Somit können die Klemmelemente 22a, 22b in gegenläufiger Richtung, d.h. aufeinander zu verstellt werden.

Im Bereich des Mittelabschnitts 27 sind ferner zwei Druckfedern 38 vorgesehen, welche zwischen dem Brückenteil 12 und dem Klemmelement 22a bzw. 22b wirksam sind und die Klemmelemente 22a, 22b in nach außen weisende Richtungen vorspannen. Beim Betätigen der Handhabe 34 in entgegengesetzter Richtung kann die Spindel 24 aus der Gewindeöffnung 30 herausgedreht werden, wodurch sich der Abstand zwischen dem Klemmelement 22a und dem Anschlagabschnitt 28 der Spindel 24 vergrößert. Durch die Kraft der Druckfedern 38 werden die Klemmelemente 22a, 22b dabei nach außen verstellt.

Auf dem Anschlagabschnitt 28 ist ein Spannhebel 40 axial verschieblich gehalten. Der Spannhebel 40 besitzt an der äußeren Stirnseite eine Kronenverzahnung 48 (Fig. 1), die wahlweise mit einer entsprechenden, am Anschlagabschnitt 28 im Bereich der Handhabe 34 vorgesehenen Verzahnung 50 in Eingriff gebracht werden kann. Zwischen dem Spannhebel 40 und der Spindel 24 ist eine Druckfeder 46 wirksam, welche den Spannhebel 40 in Richtung einer Leerlaufstellung vorspannt, in welcher die Kronenverzahnung 48 außer Eingriff mit der Verzahnung 50 steht und der Spannhebel 40 frei drehbar auf dem Anschlagabschnitt 28 gelagert ist. Zum Einstellen einer Koppelstellung zwischen dem Spannhebel 40 und der Spindel 24 muss der Spannhebel 40 entgegen der Kraft der Druckfeder 46 in Richtung auf die Handhabe 34 gezogen werden.

Durch geeignete Aussparungen sind in jedem der beiden Klemmelemente 22a, 22b zwei gegenüber der Längsachse A geneigte, konkav gewölbte Klemmabschnitte 42a, 42b gebildet, die zur Arretierung der Stützrohre in den Öffnungen 16a, 16b, 18a, 18b dienen. Die jeweiligen Klemmabschnitte 42a, 42b sind entlang der Längsachse A zueinander versetzt. Die beiden Klemmabschnitte 42a sind den beiden inneren Öffnungen 16a, 16b zugeordnet und dazu angepasst, Stützrohre des ersten Stützrohrsystems in den Öffnungen 16a, 16b zu arretieren. Die beiden Klemmabschnitte 42b sind den beiden äußeren Öffnungen 18a, 18b zugeordnet und dazu angepasst, wahlweise Stützrohre des zweiten Stützrohrsystems mit einem Stützrohrdurchmesser von 15 mm oder des dritten Stützrohrsystems mit einem Durchmesser von 19 mm zu arretieren.

Durch die genannte Betätigung der Handhabe 34 kann die Spindel 24 in die Gewindeöffnung 30 des Klemmelements 22a hineingedreht werden, so dass die Klemmelemente 22a, 22b von einer Freigabestellung, wie sie in Fig. 2 dargestellt ist, jeweils nach innen (d.h. aufeinander zu) in eine Klemmstellung versetzt werden. Dabei bewegen sich die Klemmabschnitte 42a, 42b soweit in die jeweiligen Öffnungen 16a, 16b bzw. 18a, 18b hinein, bis die Klemmabschnitte 42a, 42b auf ein dort aufgenommenes Stützrohr treffen. Durch ein weiteres Verdrehen der Spindel 24 wird eine Spannung aufgebaut, so dass die Stützrohre in den Öffnungen 16a, 16b bzw. 18a, 18b des Brückenteils 12 verklemmt werden.

Hierbei ist es von Vorteil, dass der Benutzer nur eine einzige Handhabe 34 zu betätigen braucht, um gleichzeitig zwei Stützrohre eines Stützrohrsystems an dem Brückenteil 12 zu arretieren. Durch die Verwendung einer entlang der Längsachse A des Brückenteils 12 verlaufenden Betätigungseinrichtung (Spindel 24) ist die Handhabe 34 an einer gut erreichbaren, ergonomisch günstigen Position angeordnet, in der sie auch die Anbringung von Kamerazubehörteilen an dem Brückenteil 12 (Bohrungen 14) nicht behindert. Ein weiterer Vorteil besteht darin, dass der Kraftfluss für das Verspannen der Klemmelemente 22a, 22b an den Stützrohren über die Spindel 24 (als gemeinsame Betätigungseinrichtung) verläuft. Denn hierdurch wird eine schwimmende Lagerung der aus den beiden Klemmelementen 22a, 22b und der Spindel 24 bestehenden Einheit im Brückenteil 12 gebildet, die eine gleichmäßige Kraftverteilung gewährleistet. Hierfür sind die beiden Klemmelemente 22a, 22b separat ausgebildet und gegenläufig verstellbar.

Sofern Stützrohre mit einem Durchmesser von 15 mm in den inneren Öffnungen 16a, 16b oder Stützrohre mit einem Durchmesser von 19 mm in den äußeren Öffnungen 18a, 18b aufgenommen sind, ist nur ein relativ kleiner Verstellweg der Klemmelemente 22a, 22b erforderlich, bis die Klemmabschnitte 42a oder 42b an den Stützrohren anliegen. Dies entspricht einer ersten Klemmstellung. Sollen jedoch Stützrohre mit einem Durchmesser von nur 15 mm in den äußeren Öffnungen 18a, 18b verklemmt werden, ist ein größerer Verstellweg erforderlich, bis die Klemmabschnitte 42b an den Stützrohren anliegen. Dies entspricht einer zweiten Klemmstellung. Mithilfe der zylindrischen Handhabe 34 ist hierbei ein rasches und ergonomisches Verstellen der Spindel 24 möglich.

Erst wenn ein höheres Drehmoment für den eigentlichen Klemmvorgang oder zum Lösen der Klemmung erforderlich ist, kann der Spannhebel 40 bedarfsweise kurzzeitig in seine Koppelstellung überführt werden, ohne dass dieser jedoch ständig die Bedienung der Handhabe 34 beeinträchtigt.

### Bezugszeichenliste

| | |
|---|---|
| 10 | Haltevorrichtung |
| 12 | Brückenteil |
| 14 | Bohrung |
| 16a, 16b | Öffnung |
| 18a, 18b | Öffnung |
| 20a, 20b | Führung |
| 22a, 22b | Klemmelement |
| 24 | Spindel |
| 26 | Gewindeabschnitt |
| 27 | Mittelabschnitt |
| 28 | Anschlagabschnitt |
| 30 | Gewindeöffnung |
| 31 | Innengewindeabschnitt |
| 32 | Durchführung |
| 34 | Handhabe |
| 36 | Schraube |
| 37 | Schraube |
| 38 | Druckfeder |
| 40 | Spannhebel |
| 42a, 42b | Klemmabschnitt |
| 44 | Durchgang |
| 46 | Druckfeder |
| 48 | Kronenverzahnung |
| 50 | Verzahnung |
| A | Längsachse |
| S | Symmetrieachse |

## Patentansprüche

1. Haltevorrichtung zum Befestigen von Kamerazubehörteilen an einem Kamerasystem, wobei die Haltevorrichtung (10) an Stützrohren des Kamerasystems befestigbar ist, mit:
einem Brückenteil (12), das zwei Paare von Öffnungen (16a, 16b, 18a, 18b) zum Aufnehmen von Stützrohren aufweist, wobei sich die Öffnungen (16a, 16b) des einen Paares zumindest bezüglich ihres Abstandes von den Öffnungen (18a, 18b) des anderen Paares unterscheiden;
wenigstens einem Paar von Klemmelementen (22a, 22b), die an dem Brückenteil (12) vorgesehen und zumindest zwischen einer Klemmstellung und einer Freigabestellung verstellbar sind, wobei die Klemmelemente (22a, 22b) in ihrer Klemmstellung in den Öffnungen (16a, 16b, 18a, 18b) aufgenommene Stützrohre an dem Brückenteil (12) arretieren; und
einer Betätigungseinrichtung, welche dazu ausgelegt ist, die Klemmelemente (22a, 22b) gemeinsam zu verstellen;
wobei die Klemmelemente (22a, 22b) verschiedene Klemmabschnitte (42a, 42b) aufweisen, die dazu angepasst sind, Stützrohre unterschiedlichen Durchmessers und/oder unterschiedlichen Abstands an dem Brückenteil (12) zu arretieren.

2. Haltevorrichtung nach Anspruch 1,
wobei jedes Paar von Öffnungen (16a, 16b, 18a, 18b) eine erste Öffnung (16a, 18a) und eine zweite Öffnung (16b, 18b) umfasst, wobei das Paar von Klemmelementen (22a, 22b) ein erstes Klemmelement (22a) mit mehreren Klemmabschnitten (42a, 42b) und ein zweites Klemmelement (22b) mit mehreren Klemmabschnitten (42a, 42b) aufweist, und wobei die mehreren Klemmabschnitte (42a, 42b) des ersten Klemmelements (22a) den ersten Öffnungen (16a, 18a) zugeordnet und die mehreren Klemmabschnitte (42a, 42b) des zweiten Klemmelements (22b) den zweiten Öffnungen (16b, 18b) zugeordnet sind.

3. Haltevorrichtung nach Anspruch 1 oder 2,
wobei jedes Klemmelement (22a, 22b) wenigstens zwei Klemmabschnitte (42a, 42b) aufweist, die dazu angepasst sind, Stützrohre unterschiedlichen Durchmessers an dem Brückenteil (12) zu arretieren, wobei die wenigstens zwei Klemmabschnitte (42a, 42b) des jeweiligen Klemmelements derselben Öffnung (16a, 16b, 18a, 18b) des Brückenteils (12) zugeordnet sind.

4. Haltevorrichtung nach Anspruch 3,
wobei die wenigstens zwei Klemmabschnitte (42a, 42b) des jeweiligen Klemmelements (22a, 22b) dazu angepasst sind, in unterschiedlichen Klemmrichtungen zu wirken.

5. Haltevorrichtung nach einem der vorhergehenden Ansprüche,
wobei die Klemmelemente (22a, 22b) senkrecht zu der Achse der Stützrohre versetzbar sind.

6. Haltevorrichtung nach einem der vorhergehenden Ansprüche,
wobei die Klemmelemente (22a, 22b) parallel zu einer durch die Stützrohre definierten Ebene versetzbar sind.

7. Haltevorrichtung nach einem der vorhergehenden Ansprüche,
wobei die Klemmelemente (22a, 22b) gegenläufig oder gleichläufig zueinander versetzbar sind.

8. Haltevorrichtung nach einem der vorhergehenden Ansprüche,
wobei die Betätigungseinrichtung einen Gewindetrieb zum Verstellen der Klemmelemente umfasst, wobei der Gewindetrieb eine Spindel (24) aufweist, welche an einem Ende mit einer Handhabe (34) drehfest gekoppelt ist.

9. Haltevorrichtung nach Anspruch 8,
wobei die Spindel einen Gewindeabschnitt (26) und einen Anschlagabschnitt (28) aufweist, wobei der Gewindeabschnitt (26) mit einem der Klemmelemente (22a) zusammenwirkt und der Anschlagabschnitt (28) mit einem anderen der Klemmelemente (22b) zusammenwirkt, um die genannten Klemmelemente (22a, 22b) über die Spindel (24) an den Stützrohren verspannen zu können.

10. Haltevorrichtung nach einem der vorhergehenden Ansprüche,
wobei die Klemmelemente (22a, 22b) in Richtung ihrer Freigabestellung vorgespannt sind.
